(19)

Europäisches
Patentamt
European
Patent Office
Office européen
des brevets

(11) **EP 2 835 974 A1**

(12) **EUROPEAN PATENT APPLICATION**

(43) Date of publication:
**11.02.2015 Bulletin 2015/07**

(51) Int Cl.:
**H04N 13/04** $^{(2006.01)}$

(21) Application number: **13179286.3**

(22) Date of filing: **05.08.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **TP Vision Holding B.V.
1097 JB Amsterdam (NL)**

(72) Inventor: **van Dalfsen, Age Jochem
1097 JB Amsterdam (NL)**

(74) Representative: **Busch, Patrick et al
TP Vision Europe B.V.
Intellectual Property Department
Prins Bernhardplein 200 - Floor 8
1097 JB Amsterdam (NL)**

(54) **Multi-view 3D display system and method**

(57)     An auto-stereoscopic display system for creating a 3D viewing experience for a viewer (13) present at a viewer position (P) within a viewer space, comprising a display (10) with a plurality of pixels (11), a visibility modulator (12) placed in front of the display (10) for making a visibility of the pixels angle dependent in the viewer space, circuitry (15) for deriving from a 3D image a left image and a right image, and for determining the intensities of a first group of pixels intended to be seen by the left eye of the viewer (13) at the viewing position (P) based on the left image, and for determining the intensities of a second group of pixels intended to be seen by the right eye of the viewer (13) at the viewer position (P) based on the right image, characterized in that the system is arranged to display pixels which are visible to both the left eye and the right eye of the viewer (13) at the viewer position with a reduced intensity.

**FIG. 2**

**Description**

FIELD OF THE INVENTION

The present invention relates to systems capable of displaying a stereoscopic image on a multi-view 3D display. The invention further relates to a method of rendering a stereoscopic image on such a display.

BACKGROUND OF THE INVENTION

Auto-stereoscopic 3D displays, which can present a 3D image to a viewer without the need for wearing any special glasses, have been known for a long time. The most common type contains a pixel based display and in front of that display a modulator in the form of a lenticular array or an array of striped barriers, which serves to make the visibility of the pixels angle dependent and thus enable a viewer to see two different images with the left and the right eye and so perceive a 3D image. This works well for a single viewer at a fixed position.

To enable multiple viewers to watch an auto-stereoscopic display simultaneously from different and not too strictly fixed positions, multi-view displays were introduced. These project multiple different images in different directions and allow perception of a 3D image at many positions, thus enabling multiple viewers to simultaneously perceive a 3D image. A camera system may be added to track the position of one or more users and optimize performance accordingly. Such a display system is described in US2013/0057159 A1, which also discloses a directional backlight to further enhance performance.

A disadvantage of such multi-view displays lies in the fact that the sharpness of the image decreases with the amount of depth in the image. This significantly limits the range of depth that can be perceived with acceptable image quality, in a typical case this may be limited to only about 0.2 meters in front and behind the display screen. Also, the directional backlight is expensive and is not compatible with active display technologies such as OLED and PDP.

SUMMARY OF THE INVENTION

It is an object of the invention to offer in a multi-view auto-stereoscopic display an additional viewing mode that allows a user to perceive a large amount of depth in a 3D image with good picture quality, while avoiding additional cost and staying compatible with passive as well as active display technologies.

This is achieved, according to a first aspect of the invention, by an auto-stereoscopic 3D display system comprising a display with a plurality of pixels, a visibility modulator placed in front of the display for making the visibility of the pixels angle dependent in the viewer space, circuitry for deriving from a 3D image a left image and a right image, and for determining the intensities of a first group of pixels intended to be seen by the left eye of the viewer based on the left image, and for determining the intensities of a second group of pixels intended to be seen by the right eye of the viewer based on the right image, **characterized in that** the system is arranged to display pixels which are visible to both the left eye and the right eye of the viewer with a reduced intensity. This introduces a special mode in a multi-view auto-stereoscopic display system, in which a viewer can experience a large amount of depth with good picture quality because the causes of the sharpness reduction in the regular multi-view mode have been removed. The regular multi-view mode stays available to the user, and no special backlight with associated additional cost is required. In fact, in addition to LCD, the principle is applicable equally well to display technologies that do not require a backlight, such as OLED or PDP.

According to a further aspect of the invention this is achieved by a method of rendering a stereo image on a multi-view auto-stereoscopic display for creating a 3D viewing experience for a viewer present at a viewer position within a viewer space, comprising a display with a plurality of pixels, a visibility modulator placed in front of the display for making a visibility of the pixels angle dependent in the viewer space, the method comprising steps of deriving from a 3D image a left image and a right image, and determining the intensities of a first group of pixels intended to be seen by the left eye of the viewer at the viewing position based on the left image, and determining the intensities of a second group of pixels intended to be seen by the right eye of the viewer at the viewer position based on the right image, **characterized in that** pixels which are visible to both the left eye and the right eye of the viewer at the viewer position are displayed with a reduced intensity. This has the same advantages as described above, of offering a large amount of depth with good picture quality while leaving the multi-view mode of operation available as well, and requiring no special backlight.

An embodiment of a system according to the invention is arranged such that it determines the intensity of a pixel from a corresponding intensity in the left image multiplied by a left weighting function and a corresponding intensity in the right image multiplied by a right weighting function, where the left weighting function and the right weighting function each depend on the position of the pixel on the display and on the viewer position. This has the advantage that the weighting functions can accurately take into account all aspects of the geometry of the display, the visibility modulator and the viewer position, and calculate the optimal intensity value for each pixel to produce good 3D experience and good picture quality.

Another embodiment of a system according to the invention includes a position detector to determine the viewer position. This has the advantage that if the user moves, the pixel intensities can be adapted to the changing user position dynamically, and the 3D experience and the picture quality can be maintained.

In a further embodiment the position detector comprises a camera and image analysis means for determining the viewer position based on the captured camera images. This has the advantage of reliably determining the position of the viewer's eyes.

BRIEF DESCRIPTION OF THE DRAWINGS

Further embodiments of the system according to the invention and the advantages thereof will be apparent from and elucidated further with reference to the accompanying drawings, in which

> Fig. 1 shows a multi-view display;
> Fig. 2 shows a multi-view display system;
> Fig. 3 shows a viewer and a slanted lenticular visibility modulator;
> Fig. 4 shows a u function, and its relation to the display geometry;
> Fig. 5 shows weighting functions;
> Fig. 6 shows improved weighting functions.

DETAILED DESCRIPTION OF EMBODIMENTS

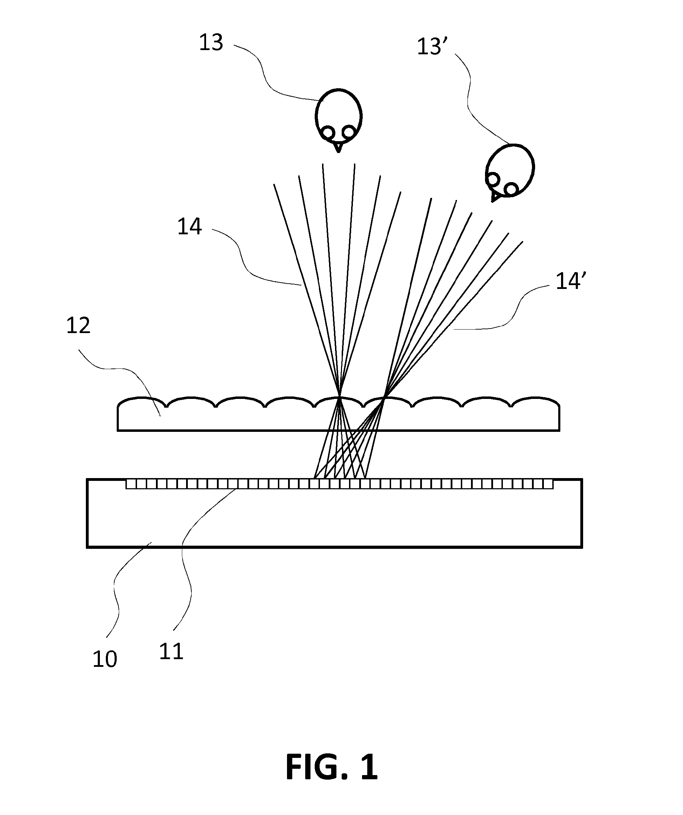

As an introduction to multi-view display prior art, Figure 1 illustrates a multi-view 3D display. It contains a display 10, this may be any pixel based display such as LCD, OLED or PDP. The display contains pixels 11. In front of the display a visibility modulator 12 is placed. This may be a striped barrier, in which case narrow stripes block the visibility of certain pixels from certain angles. Most commonly the visibility modulator is formed by a lenticular lens array, in which small cylinder lenses project the light emitted by the pixels in different directions, as is illustrated in Figure 1. The illustration shows how the pixels can be used to generate a cone of different views 14, and how the cones repeat themselves due to the periodical nature of the lens array. When a user 13 positions himself such that his left and right eye capture different views, he may perceive a 3D image. Due to the repetition of the cones a second viewer 13' may simultaneously see two views in a different cone 14', not necessarily the same pair of views, and also perceive a 3D image. Within a cone there are multiple views that together form a good 3D image. Only at the boundary between two cones no good 3D image is formed, but this still leaves sufficient freedom for multiple users to position themselves and experience 3D.

The separation between two adjacent views is not perfect and the views overlap somewhat. To a degree this is even intentional to avoid visual artefacts. When the depth in the image increases, the disparity of a pair of left and right images on the screen becomes larger and this causes the overlapping views to create increasingly more horizontal blurring of the image. For example, for an object in the image to be perceived as being positioned infinitely far behind the display, the disparity between the left and right image on the display will be around 6 centimetres. For practical display and living room dimensions, the depth of objects may be limited to a region of only about 0.2 meter in front and behind the display screen itself to maintain an acceptable picture quality in the multi-view 3D experience.

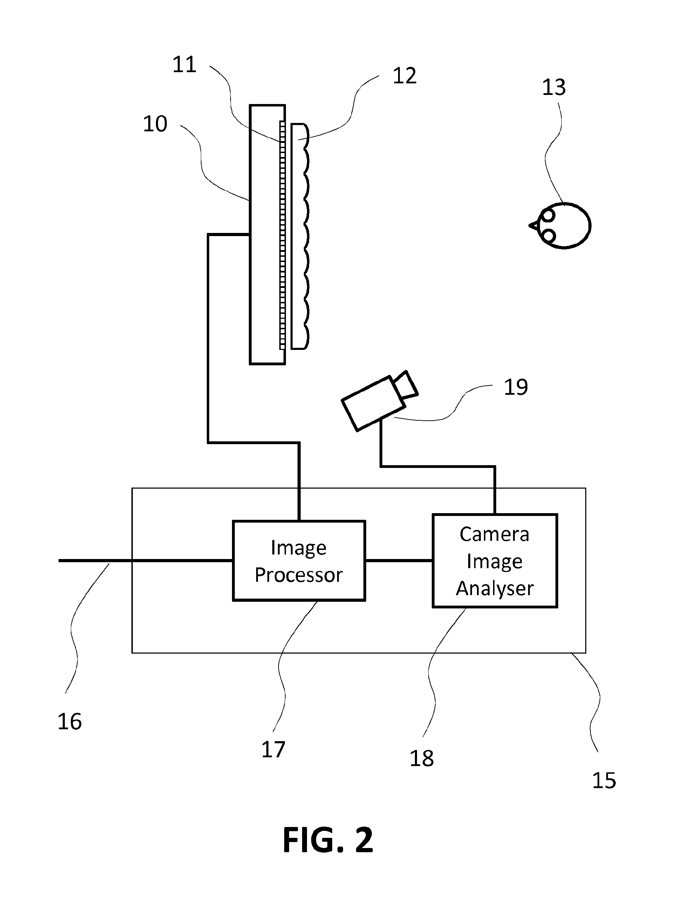

Figure 2 shows an embodiment of a display system according to the current invention. As in Figure 1, it contains a display 10 with pixels 11 and a visibility modulator 12, here illustrated as a lenticular array. The system contains circuitry 15. The circuitry may receive a 3D input signal at the input 16. This input signal may for example be a 3D video signal. It may contain separate left and right images, or it may contain a 2D image plus a depth map image. An image processor 17 will derive from this input image a left image and a right image, and scale these to the pixel dimensions of the display.

In order to generate a good quality 3D perception with a large amount of depth Impression for the viewer 13, the image processor needs accurate information on the position of the user, both the distance from the display and both transverse positions. This may be assumed as a fixed pre-determined position, but it may also be determined with the help of a position detector. Figure 2 shows a camera 19, connected to a camera image analyser 18. With known image analyses techniques the system may determine from the captured camera images the position of the user, or preferably of the user's eyes. A single camera is shown in Figure 2, but two or even more camera's may be used, which helps to accurately determine the user position, especially the distance from the display. Other means to determine the position of the user may also be used, the invention is not limited to the use of a camera for this purpose.

For the given left and right images and user position, the image processor 17 must determine the intensities of each (sub)pixel on the display to make sure the user's left eye receives only a complete left image and the user's right eye receives only a complete right image, from all areas of the display without the multi-view blurring described above.

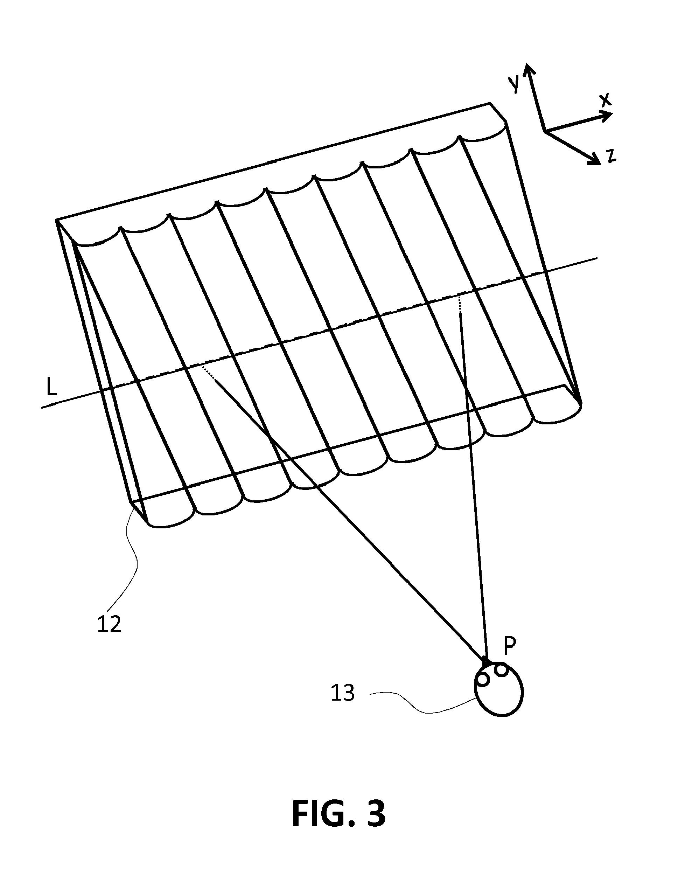

To explain how this is achieved, Figure 3 begins with introducing a coordinate system, where $x$ and $y$ are defined along the horizontal and vertical dimensions of the screen, and $z$ perpendicular to it. Note that as an example, the visibility modulator in Figure 3 is drawn as an exaggerated slanted lenticular, which is the most used solution in auto-stereoscopic televisions at present. The line indicated as L runs across the display along the x-axis. The point P, the viewer position, is here defined as the midpoint right between the eyes of the viewer. Note that due to the slant of the visibility modulator, the position of the user's head is relevant not only in the *x* and *z* direction, but also in the *y* direction. The input left and right images will be scaled to the display dimensions and can be expressed as (sub)pixel values L(*x,y,c*) and R(*x,y,c*) where *c* indicates the colour - commonly red, green and blue are used.

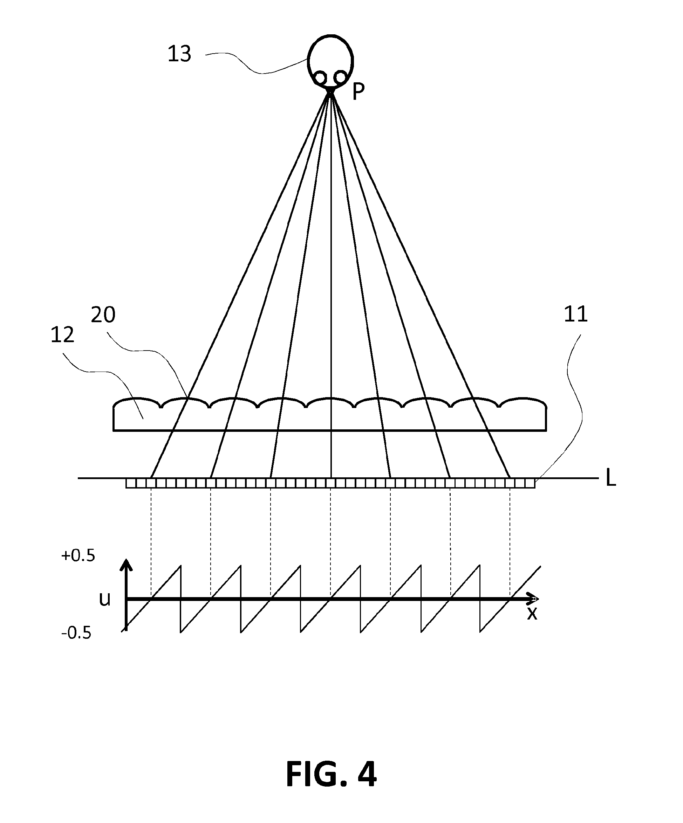

Figure 4 shows a cross-section view across the same line L of figure 3. Rays are drawn from the viewer position P to the centre of each lenticule 20 and landing on the display pixels. Here the lines are drawn as straight lines for illustration, for an accurate calculation refraction may be taken into account, for example by ray tracing on the accurate geometry of the lenticular array across the area of the display, including the slant as shown in Figure 3. If the visibility modulator is of the striped barrier type, the same principles apply and straight lines will be accurate. Also variations across the display may be taken into account, for example the pitch of the lenticular often varies slightly across the display to optimize the geometry for a viewer positioned at an ideal viewing position.

A function u(*x,y,c*,P) is defined with values between -0.5 and +0.5, which signifies a projected position of a (sub-)pixel. Light rays emitted from (sub-)pixels with u=0 through the centre of a lenticule will land right on P between the eyes of the viewer. (Sub-)pixels with u>0 will project towards the right eye of the viewer, and (sub-)pixels with u<0 will project towards the left eye of the viewer.

The desired intensity I of each pixel of the display can now be expressed as

$$I(x,y,c) = W_L(u) * L(x,y,c) + W_R(u) * R(x,y,c)$$

where $W_L$ and $W_R$ are weighting functions that determine how a pixel intensity is composed from the left and right images, depending on the position of the pixel on the display and on the user position. The geometry of the lenticular array, or other visibility modulator, is reflected in the function u(*x,y,c*,P). The weighting functions $W_L$ and $W_R$ must now be defined such that the viewer's left eye receives only light from the left image, and the viewer's right eye receives only light from the right image.

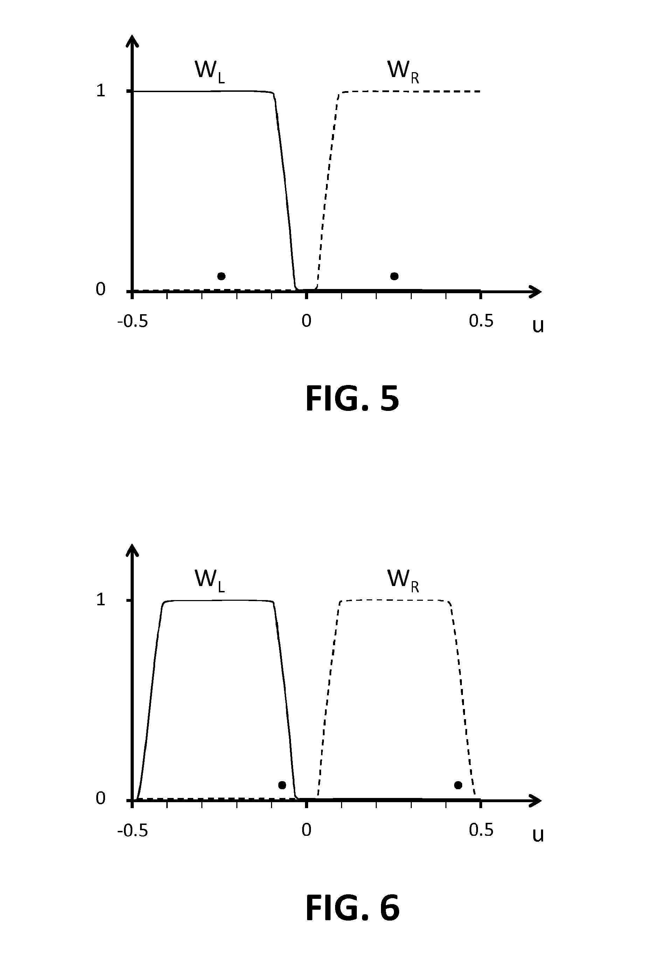

Figure 5 shows a graphical representation of weighting functions $W_L$ and $W_R$. $W_L$ must be effectively zero for values of u>0, whereas $W_R$ must be effectively zero for values of u<0. For proper separation of the left and right images, it is best to have a narrow dark zone around u=0 where both $W_L$ and $W_R$ are low or zero. For reference, note that u=0 corresponds to the viewer's nose bridge (more accurately: light emitted from (sub)pixels with u=0 will land on the viewer's nose bridge). The viewer's eyes are projected around u = +/- 0.25, indicated by black dots in Figure 5, for a user positioned at the optimal viewing distance for the best stereo effect. So the dark zone around u=0 must be kept narrow enough to avoid overlapping the viewer's eyes, but wide enough to maintain a good separation between left and right images and thus avoid crosstalk. A precise mathematical expression for $W_L$ and $W_R$ is not needed, the functions can be determined and optimized experimentally for a given design of display and visibility modulator.

A further improvement of the weighting functions $W_L$ and $W_R$ is shown in Figure 6. It is advantageous to let the $W_L$ and $W_R$ functions go to zero also at u = +/- 0.5. In the case of Figure 5, if the viewer would be positioned somewhat to the left or right of the ideal position corresponding to u=0, then one eye would approach the dark zone around u = 0, and the image in that eye would reduce in intensity while the image in the other eye stays at the same intensity, which is annoying for the viewer. By letting the $W_L$ and $W_R$ functions go to zero close to u = +/- 0.5 in the same way they go to zero close to u = 0, the image in both eyes would both decrease equally in intensity in the situation described above, and the annoying artefacts are avoided. For illustrations, shifted eye positions are indicated by black dots in Figure 6. Of course this situation only occurs if tracking of the viewer position is not used, or for example it may occur briefly if the tracking is too slow to follow certain movements of the viewer.

The actual position of the viewer's eyes is in fact known from the tracking of the viewer position, so their projected position in values of u can be calculated, and the weighting functions $W_L$ and $W_R$ may in fact be adapted to the measured eye positions for optimal stereo effect and minimal crosstalk.

Although several embodiments of the present invention have been illustrated in the accompanying drawings and described in the foregoing detailed description, it will be understood that the invention is not limited to the embodiments disclosed, but is capable of numerous modifications without departing from the scope of the invention as set out in the following claims.

**Claims**

1.    An auto-stereoscopic display system for creating a 3D viewing experience for a viewer (13) present at a viewer position (P) within a viewer space, comprising

- a display (10) with a plurality of pixels (11),
- a visibility modulator (12) placed in front of the display (10) for making a visibility of the pixels angle dependent in the viewer space,
- circuitry (15) for deriving from a 3D image a left image and a right image, and for determining the intensities of a first group of pixels intended to be seen by the left eye of the viewer (13) at the viewing position (P) based on the left image, and for determining the intensities of a second group of pixels intended to be seen by the right eye of the viewer (13) at the viewer position (P) based on the right image, **characterized in that** the system is arranged to display pixels which are visible to both the left eye and the right eye of the viewer (13) at the viewer position with a reduced intensity.

2. An auto-stereoscopic display system as described in claim 1, where the circuitry (15) determines an intensity of a pixel (11) from a corresponding intensity in the left image multiplied by a left weighting function and a corresponding intensity in the right image multiplied by a right weighting function, where the left weighting function and the right weighting function each depend on the position of the pixel (11) on the display (10) and on the viewer position.

3. An auto-stereoscopic display system as described in claim 1 or 2, further comprising a position detector for determining the viewer position (P) and wherein the system is arranged to reduce the intensities of pixels (11) in dependence on the determined viewer position (P) such that the intensity of pixels (11) with the reduced intensities are located on positions which are dependent on the determined viewer position (P).

4. An auto-stereoscopic display system as described in claim 3, **characterized in that** the position detector comprises a camera (19) for capturing images of the viewer (13) in the viewer space and an analyser (18) for determining the viewer position (P) on the basis of an analyses of the captured images.

5. An auto-stereoscopic display system as described in any of the previous claims, where the visibility modulator (12) is a lenticular lens array.

6. An auto-stereoscopic display system as described in any of the previous claims, where the display (10) and the visibility modulator (12) form a multi-view display.

7. A method of rendering a stereo image on a *multi-view* auto-stereoscopic display for creating a 3D viewing experience for a viewer (13) present at a viewer position (P) within a viewer space, comprising

- a display (10) with a plurality of pixels (11),
- a visibility modulator (12) placed in front of the display (10) for making a visibility of the pixels angle dependent in the viewer space, the method comprising steps of
- deriving from a 3D image a left image and a right image, and
- determining the intensities of a first group of pixels intended to be seen by the left eye of the viewer (13) at the viewing position (P) based on the left image, and
- determining the intensities of a second group of pixels intended to be seen by the right eye of the viewer (13) at the viewer position (P) based on the right image,
**characterized in that** pixels which are visible to both the left eye and
the right eye of the viewer (13) at the viewer position are displayed with a reduced intensity.

8. The method of Claim 7, where an intensity of a pixel (11) is determined from a corresponding intensity in the left image multiplied by a left weighting function and a corresponding intensity in the right image multiplied by a right weighting function, where the left weighting function and the right weighting function each depend on the position of the pixel (11) on the display (10) and on the viewer position.

9. The method of Claim 7 or 8, further comprising the use of a position detector for determining the viewer position (P) and wherein the intensities of pixels (11) are reduced in dependence on the determined viewer position (P) such that the intensity of pixels (11) with the reduced intensities are located on positions which are dependent on the determined viewer position (P)

10. The method of claim 9 where the position detector comprises a camera (19) for capturing images of the viewer (13) in the viewer space and wherein the viewer position (P) is determined on the basis of an analyses of the captured images.

**FIG. 1**

**FIG. 2**

# FIG. 3

# FIG. 4

FIG. 5

FIG. 6

Europäisches
Patentamt

European
Patent Office

Office européen
des brevets

**EUROPEAN SEARCH REPORT**

Application Number

EP 13 17 9286

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2011/063993 A1 (FRAUNHOFER GES FORSCHUNG [DE]; DE LA BARRE RENE [DE]; JURK SILVIO [DE]) 3 June 2011 (2011-06-03) * page 13, lines 1-6 * ----- | 1-10 | INV. H04N13/04 |
| X | WO 2011/006551 A1 (FRAUNHOFER GES FORSCHUNG [DE]; DE LA BARRE RENE [DE]; ROEDER HANS [DE]) 20 January 2011 (2011-01-20) * page 7, lines 19-24; figures 1-3 * ----- | 1-10 | |
| A | US 2011/157323 A1 (CHEN WU-LI [TW] ET AL) 30 June 2011 (2011-06-30) * paragraphs [0078], [0083]; figures 23,27 * ----- | 1-10 | |
| A | WO 2012/157707 A1 (SUMITOMO ELECTRIC INDUSTRIES [JP]; SUMITOMO ELEC FINE POLYMER INC [JP]) 22 November 2012 (2012-11-22) * abstract; figure 2 * ----- | 1-10 | |

TECHNICAL FIELDS
SEARCHED      (IPC)

H04N

The present search report has been drawn up for all claims

| Place of search | Date of completion of the search | Examiner |
|---|---|---|
| The Hague | 25 September 2013 | Zakharian, Andre |

EPO FORM 1503 03.82 (P04C01)

**ANNEX TO THE EUROPEAN SEARCH REPORT
ON EUROPEAN PATENT APPLICATION NO.**

EP 13 17 9286

This annex lists the patent family members relating to the patent documents cited in the above-mentioned European search report.
The members are as contained in the European Patent Office EDP file on
The European Patent Office is in no way liable for these particulars which are merely given for the purpose of information.

25-09-2013

| Patent document cited in search report | | Publication date | Patent family member(s) | | Publication date |
|---|---|---|---|---|---|
| WO 2011063993 | A1 | 03-06-2011 | EP | 2508005 A1 | 10-10-2012 |
| | | | KR | 20120109490 A | 08-10-2012 |
| | | | WO | 2011063993 A1 | 03-06-2011 |
| WO 2011006551 | A1 | 20-01-2011 | DE | 102009034355 B3 | 27-01-2011 |
| | | | EP | 2454885 A1 | 23-05-2012 |
| | | | KR | 20120104157 A | 20-09-2012 |
| | | | US | 2012154395 A1 | 21-06-2012 |
| | | | WO | 2011006551 A1 | 20-01-2011 |
| US 2011157323 | A1 | 30-06-2011 | CN | 102109751 A | 29-06-2011 |
| | | | US | 2011157323 A1 | 30-06-2011 |
| WO 2012157707 | A1 | 22-11-2012 | JP | 2012242588 A | 10-12-2012 |
| | | | TW | 201303370 A | 16-01-2013 |
| | | | WO | 2012157707 A1 | 22-11-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 20130057159 A1